# EUROPEAN PATENT SPECIFICATION

(11) **EP 3 247 058 B1**
(45) Date of publication and mention of the grant of the patent: **14.08.2019**
(21) Application number: 16737180.6
(22) Date of filing: 07.01.2016
(51) Int. Cl.: H04J 3/16, H04J 3/00, H04L 1/00, H04J 3/06

(54) **TRANSMISSION CIRCUIT, RECEPTION CIRCUIT, OPTICAL TRANSFER SYSTEM, AND METHOD FOR TRANSMITTING MULTIFRAMES**
SENDESCHALTUNG, EMPFANGSSCHALTUNG, OPTISCHES ÜBERTRAGUNGSSYSTEM UND VERFAHREN ZUR ÜBERTRAGUNG VON MULTIFRAMES
CIRCUIT DE TRANSMISSION, CIRCUIT DE RÉCEPTION, SYSTÈME DE TRANSFERT OPTIQUE, ET PROCÉDÉ DE TRANSMISSION DE MULTITRAMES

(30) Priority: 14.01.2015 JP 2015005055
(43) Date of publication of application: 22.11.2017
(73) Proprietor: NEC Corporation, Tokyo 108-8001 (JP)
(72) Inventor: HARA, Yasushi, Tokyo 108-8001 (JP)
(74) Representative: Brevalex
(86) International application number: PCT/JP2016/000046
(87) International publication number: WO 2016/114109

(56) References cited:
- JP-A- H 046 930
- JP-A- H04 290 316
- JP-A- 2003 110 430
- JP-A- 2012 186 521
- JP-A- 2012 186 521
- JP-A- 2014 039 106
- US-A1- 2010 040 370
- US-A1- 2013 031 437

## Description

### [Technical Field]

The present invention relates to a transmission circuit, a reception circuit, an optical transfer system, and a method for transmitting a multiframe, and in particular, to a transmission circuit that transmits a multiframe including a plurality of OTN (Optical Transport Network) frame signals, a reception circuit, an optical transfer system, and a method for transmitting a multiframe.

### [Background Art]

With an increase in capacity of data communication in recent years, in optical communication, multiplexing of optical wavelengths and speeding-up of transfer speed are advancing. In WDM (Wavelength Division Multiplexing) transfer, optical communication using an OTN recommended by ITU-T (International Telecommunication Union Telecommunication Standardization Sector) G.709 has become mainstream. In the ITU-T G.709, an OTN frame of 4080 bytes/subframe×4 rows independent of transfer speed is defined. This OTN frame includes overhead and FEC code (Forward Error Correction code) for compensating quality degradation in transfer path.

In the WDM transfer, interference between wavelengths and self-interference may be generated due to a transfer characteristic of an optical fiber, resulting in generation of burst errors. In the ITU-T G.709, an error correction code is generated after sequence conversion of data signals in a subframe, and a sequence of data signals during the error correction code generation is converted (interleaved), whereby errors are dispersed inside the subframe to cope with burst errors. The interleaving is disclosed in PTL 1 or the like. Further, a method for coping with burst errors using an error correction code is disclosed in PTL 2 or the like.

However, due to increase of transfer speed, a time length for error-correctable burst errors becomes short. While an error correction code is generated for each subframe, a size of a subframe is fixed, and therefore with an increase in transfer speed, a time slot per frame relatively becomes short. While, of OTN frames, for example, a lowest-speed OTU1 frame has a transfer speed of 2.7 Gbps and a time slot per frame of 49 µsec, a highest-speed OTU4 frame has a transfer speed of 111.8 Gbps and a time slot per frame of 1.2 µsec. The time slot of the OTU4 frame is approximately 1/50 of that of the OTU1 frame, and therefore, in the OTU1, errors are dispersed and error correction can be performed, but in the OTU4, it is impossible in some cases to disperse errors and perform error correction.

In PTL 3, it is proposed that, by continuously using data series for a plurality of frames, a predetermined rule is rearranged in a frame unit and interleaving is performed in a plurality of inter-frame units.

### [Citation List]

### [Patent Literature]

[PTL 1] Japanese Laid-open Patent Publication No. H6-014001
[PTL 2] Japanese Laid-open Patent Publication No. 2011-61636
[PTL 3] Japanese Laid-open Patent Publication No. 2003-110430

### [Summary of Invention]

### [Technical Problem]

However, in the technique of PTL 3, it is necessary to continue to process, without interruption, data of a plurality of frames transmitted/received continuously, and therefore a processing load remarkably increases.

In view of the above problem, the present invention has been made, and an object of the present invention is to provide a transmission circuit according to claim 1, a reception circuit according to claim 4, an optical transfer system according to claim 6 and an optical transfer method according to claim 7 capable of easily performing error correction on burst errors for a multiframe including a plurality of OTN frame signals without increasing a processing load.

The invention is defined by the appended claims. Embodiments not falling within the scope of the appended claims are to be understood merely as examples useful for understanding the invention.

Document US2013/0031437 A1 describes a Multiple data permutation operations in respective different dimensions used to provide an overall effective data permutation using smaller blocks of data in each permutation than would be used in directly implementing the overall permutation in a single permutation operation. Data that has been permuted in one permutation operation is block interleaved, and the interleaved data is then permuted in a subsequent permutation operation.

Document JP2012-186521-A discloses an optical fiber communications system which communicates considering a frame number which added m redundant frames to n transmission frames as a symbolic language of one symbol in order to have a plurality of optical transmission devices connected via a channel and to communicate using a transmission frame between said plurality of optical transmission devices, each of said plurality of optical transmission devices is provided with an OTUk framer,
An optical fiber communications system, wherein the aforementioned OTUk framer performs disappearance correction to which it corresponded to an burst error by using an error correcting code which made a frame number of a n+m individual the number of symbols.

Document US 2010/0040370 A1 describes a frame generating apparatus including an optical transport network frame generator configured to generate an optical transport network frame from a client signal; and a frame decomposer configured to perform serial-parallel conversion on the optical transport network frame to generate a plurality of virtual lanes, where the optical-transport-network frame generator arranges frame synchronization bytes and virtual lane identifiers in an overhead area and/or a fixed stuff part so that a frame synchronization byte and a virtual lane identifier are arranged in each virtual lane.

### [Solution to Problem]

In order to achieve the above object, a transmission circuit according to the present invention is a transmission circuit that transmits a multiframe including N OTN (Optical Transport Network) frame signals that each accommodate an MFAS (Multiframe Alignment Signal) and a plurality of data signals, the transmission circuit including: a transmission-side signal recognition means for detecting the MFAS and recognizing an order i (1≤i≤N) of the OTN frame signal; an intra-multiframe sequence conversion means for converting a sequence of the plurality of data signals inside the multiframe in accordance with the recognized order i; a transmission-side rearranging means for acquiring the sequence-converted data signals in a multiframe unit, consolidating the sequence-converted data signals into lengths equal to those of the OTN frame signals respectively, and generating N quasi-OTN frame signals being sequentially added with an MFAS; and a transmission means for transmitting a multiframe including the N generated quasi-OTN frame data signals in a multiframe unit; consolidating the sequence-converted data signals into lengths equal to those of the OTN frame signals respectively; generating N quasi-OTN frame signals being sequentially added with an MFAS; and transmitting a multiframe including the N generated quasi-OTN frame signals.

### [Advantageous Effects of Invention]

According to the above-described aspects of the present invention, it is possible to perform error correction easily on burst errors for a multiframe including a plurality of OTN frame signals without increasing a processing load.

### [Brief Description of Drawings]

FIG. 1A is a system configuration diagram of an optical transfer system 10 according to a first example.
FIG. 1B is a block configuration diagram of a transmission circuit 20 according to the first example.
FIG. 1C is a block configuration diagram of a reception circuit 30 according to the first example.
FIG. 2 is a diagram illustrating data signal sequences of OTN frame signals and quasi-OTN frame signals.
FIG. 3 is a system configuration diagram of an optical transfer system 100 according to an embodiment.
FIG. 4 is a frame configuration diagram of an OTN frame signal.
FIG. 5 is a block configuration diagram of a multiframe interleaver 250 according to the embodiment.
FIG. 6 is a diagram illustrating a sequence replacement procedure of data signals in the multiframe interleaver 250 according to the embodiment.
FIG. 7 is a block configuration diagram of a multiframe deinterleaver 320 according to the embodiment.

### [Description of Embodiments]

### <First Example>

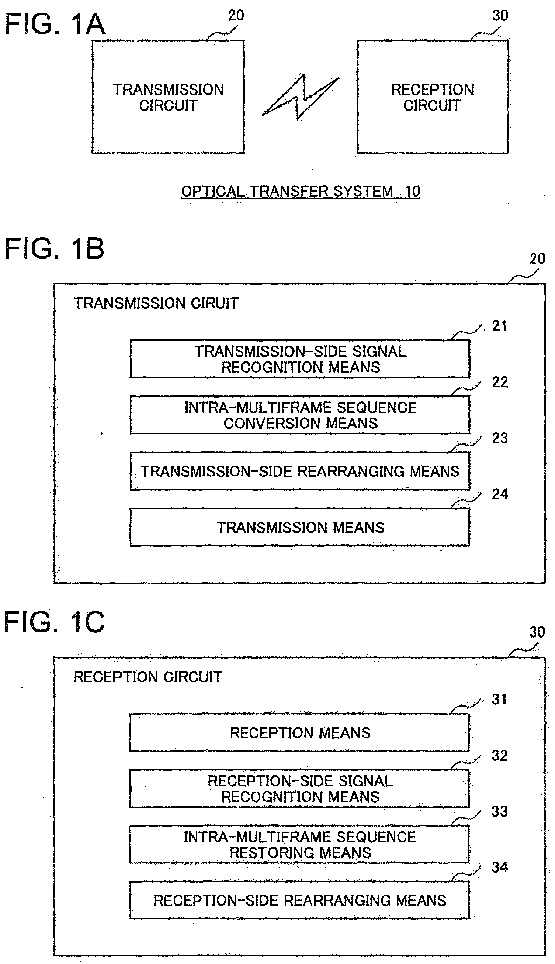

A first example useful for understanding the present invention will be described. A system configuration diagram of an optical transfer system according to the present example embodiment is illustrated in FIG. 1A. As illustrated in FIG. 1A, an optical transfer system 10 includes a transmission circuit 20 and a reception circuit 30.

The transmission circuit 20 transmits a multiframe including N OTN (Optical Transport Network) frame signals that each accommodate an MFAS (Multiframe Alignment Signal) and a plurality of data signals.

The reception circuit 30 receives the multiframe transmitted from the transmission circuit 20.

In the present example, a quasi-OTN frame signal generated by replacing data signals of an OTN frame signal in a multiframe unit is transmitted from the transmission circuit 20. The reception circuit 30 having received the quasi-OTN frame signal restores the quasi-OTN frame signal to the original OTN frame signal in a multiframe unit. The transmission circuit 20 and the reception circuit 30 will be described in detail.

First, the transmission circuit 20 will be described. A block configuration diagram of the transmission circuit 20 according to the present example is illustrated in FIG. 1B. In FIG. 1B, the transmission circuit 20 includes a transmission-side signal recognition means 21, an intra-multiframe sequence conversion means 22, a transmission-side rearranging means 23, and a transmission means 24.

The transmission-side signal recognition means 21 detects an MFAS of an input OTN frame signal and recognizes an order i (1≤i≤N) of the OTN frame signal from the detected MFAS.

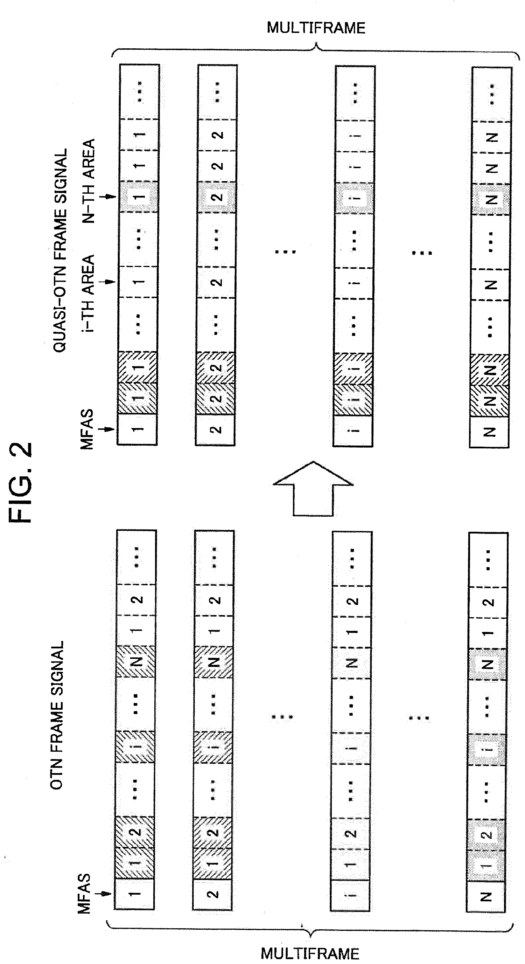

The intra-multiframe sequence conversion means 22 replaces a sequence of data signals of N OTN frame signals configuring a multiframe in accordance with the order i recognized in the transmission-side signal recognition means 21 and configures data signals of a multiframe including N quasi-OTN frame signals. The intra-multiframe sequence conversion means 22 according to the present example embodiment sequentially accommodates, as illustrated in FIG. 2, N continuous data signals accommodated in the input i-th OTN frame signal in an i-th data signal area of the N quasi-OTN frame signals arranged in an MFAS order and thereby sequence-converts the data signals.

The transmission-side rearranging means 23 acquires the data signals sequence-converted in a multiframe unit, consolidates the sequence-converted data signals into lengths equal to those of the OTN frame signals respectively, and generates, by sequentially adding an MFAS, N quasi-OTN frame signals illustrated in FIG. 2. In FIG. 2, the transmission-side rearranging means 23 adds an MFAS indicating an i-th order to signals in which i-th data signals of OTN frame signals inside a multiframe are arranged in an MFAS order of the OTN frame signal and thereby generates an i-th quasi-OTN frame signal.

The transmission means 24 transmits a multiframe including N generated quasi-OTN frame signals.

When sequence replacement of data signals is performed in a multiframe unit, sequence replacement may be performed always for a predetermined number of data signals, and therefore compared with a case where sequence replacement is performed intermittently for input data signals, a processing load on the transmission circuit 20 can be reduced.

Next, the reception circuit 30 will be described. A block configuration diagram of the reception circuit 30 according to the present example embodiment is illustrated in FIG. 1C. In FIG. 1C, the reception circuit 30 includes a reception means 31, a reception-side signal recognition means 32, an intra-multiframe sequence restoring means 33, and a reception-side rearranging means 34.

The reception means 31 receives a multiframe including N quasi-OTN frame signals transmitted from the transmission circuit 20.

The reception-side signal recognition means 32 detects an MFAS of the input quasi-OTN frame signal and recognizes an order i of the input quasi-OTN frame signal from the detected MFAS.

The intra-multiframe sequence restoring means 33 restores a sequence of data signals of the quasi-OTN frame signal to the original sequence inside the multiframe using a procedure opposite to that of the intra-multiframe sequence conversion means 22 of the transmission circuit 20 in accordance with the order i recognized in the reception-side signal recognition means 32.

The reception-side rearranging means 34 acquires the sequence-restored data signals in a multiframe unit, consolidates the sequence-restored data signals into lengths equal to those of the quasi-OTN frame signals respectively, and restores N OTN frame signals being sequentially added with an MFAS.

When sequence restoration of data signals is performed in a multiframe unit, sequence restoration may be performed for a predetermined number of data signals, and therefore compared with a case where sequence restoration is performed intermittently for input data signals, a processing load on the reception circuit 30 can be reduced.

In the optical transfer system 10 according to the present example, a multiframe in which data signals are replaced using a predetermined procedure inside a multiframe is transferred between the transmission circuit 20 and the reception circuit 30. Thereby, even when burst errors exceeding a size of a frame are generated, the errors are dispersed between frames and error correction can be performed.

In the optical transfer system 10 according to the present example embodiment, data signals are replaced in a multiframe unit using a predetermined procedure. In this case, the transmission circuit 20 and the reception circuit 30 may perform sequence conversion and restoration for a predetermined number of data signals. Therefore, the optical transfer system 10 according to the present example can easily perform error correction of burst errors without increasing a processing load on the transmission circuit 20 and the reception circuit 30.

### <Embodiment>

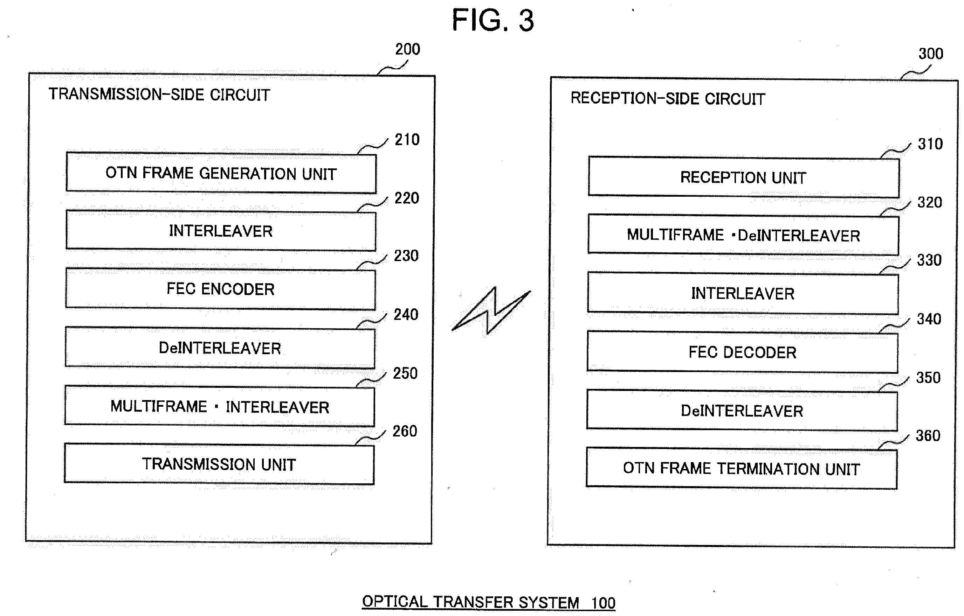

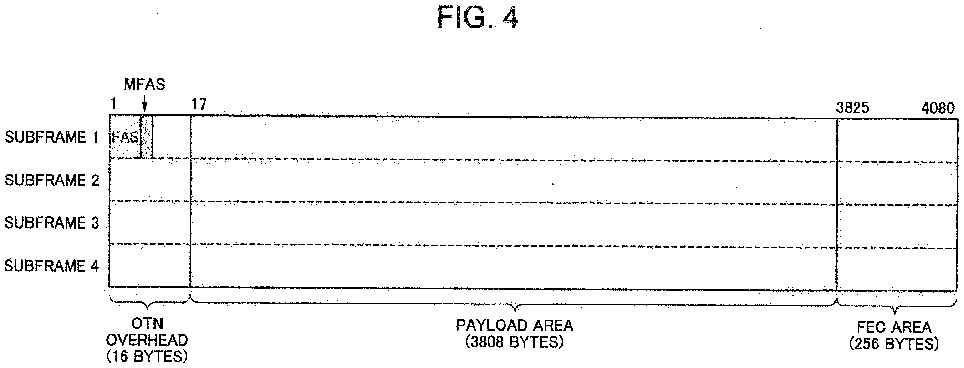

An embodiment will be described. A system configuration diagram of an optical transfer system according to the present embodiment is illustrated in FIG. 3. In FIG. 3, an optical transfer system 100 includes a transmission-side circuit 200 and a reception-side circuit 300. The transmission-side circuit 200 and the reception-side circuit 300 transmit/receive a multiframe including 256 OTN frame signals. The OTN frame signal according to the present example embodiment conforms to a frame configuration defined in ITU-T G.709. A frame configuration of the OTN frame signal is illustrated in FIG. 4.

As illustrated in FIG. 4, the OTN frame signal includes four subframes 1 to 4. A size of each subframe is 4080 bytes including a 16-byte OTN overhead, a 3808-byte payload area, and a 256-byte FEC area.

In the OTN overhead, a fame alignment and various types of overheads are accommodated. In a head of the subframe 1, an FAS (Frame Alignment Signal) that is a frame synchronization signal and an MFAS (Multiframe Alignment Signal) that is management information of a transfer path side are accommodated. A byte value of the FAS is F6F6F6282828 and its transmission is performed without scrambling. On the other hand, the MFAS is assigned with numbers of 0 (00000000) to 255 (11111111) in a generation order of OTN frame signals.

Data signals are accommodated in a payload area of 3808×4 bytes. Further, in an FEC area of 256 bytes of each subframe, 16 pieces of 16-byte FEC blocks are arranged, and in the OTN frame, 64 FEC blocks are arranged.

Next, the transmission-side circuit 200 and the reception-side circuit 300 will be described. First, the transmission-side circuit 200 will be descried. As illustrated in FIG. 3, the transmission-side circuit 200 includes an OTN frame generation unit 210, an interleaver 220, an FEC encoder 230, a deinterleaver 240, a multiframe interleaver 250, and a transmission unit 260.

The OTN frame generation unit 210 generates an OTN fame signal conforming to a frame configuration defined in ITU-T G.709 based on a transfer signal input to the transmission-side circuit 200 and further outputs, to the interleaver 220, the generated signal being added with an OTN overhead described in FIG. 4.

The interleaver 220 replaces a signal sequence of the input OTN frame signal in a predetermined order for each subframe and outputs the replaced sequence to the FEC encoder 230. The interleaver 220 according to the present example embodiment replaces the signal sequence of the OTN frame signal in accordance with a sequence conversion method defined in ITU-T G.975 (a code correction method of a submarine system). The interleaver 220 is included in an inter-subframe sequence conversion means of CLAIMS.

The FEC encoder 230 generates an error correction code using data signals included in a payload area of the OTN frame signal. The FEC encoder 230 embeds the generated correction code in an FEC area (256 bytes) of an OTN frame signal in which the signal sequence input from the interleaver 220 has been replaced and outputs the OTN frame signal to the deinterleaver 240. The FEC encoder 230 is included in an error correction code adding means of CLAIMS.

The deinterleaver 240 restores the OTN frame signal input from the FEC encoder 230 to an OTN frame signal of the original sequence using a procedure opposite to that of the interleaver 220. The deinterleaver 240 outputs the restored OTN frame signal to the multiframe interleaver 250. The deinterleaver 240 is included in an inter-subframe sequence restoring means of CLAIMS.

The multiframe interleaver 250 replaces data (data signals, a correction code, etc.) excluding a frame alignment of the input OTN frame signal in a multiframe unit and outputs the replaced data to the transmission unit 260. In other words, the multiframe interleaver 250 replaces 256 input OTN frame signals among 256 OTN frames. An OTN frame signal in which a signal sequence has been replaced in a multiframe unit is output to the transmission unit 260. Replacement of a signal sequence of a multiframe unit in the multiframe interleaver 250 will be described later.

The transmission unit 260 performs E/O (electrical-to-optical) conversion of the OTN frame signal input from the multiframe interleaver 250 and transmits the converted signal as a transmission signal. The transmission signal transmitted from the transmission-side circuit 200 passes through a transfer path and is received by the reception-side circuit 300.

Next, the reception-side circuit 300 will be described. As illustrated in FIG. 3, the reception-side circuit 300 includes a reception unit 310, a multiframe deinterleaver 320, an interleaver 330, an FEC decoder 340, a deinterleaver 350, and an OTN frame termination unit 360.

The reception unit 310 preforms O/E (optical-to-electrical) conversion of the transmission signal received from the transmission-side circuit 200 via the transfer path and outputs the converted signal to the multiframe deinterleaver 320 as a reception signal.

The multiframe deinterleaver 320 replaces a sequence in the input reception signal in a multiframe unit using a procedure opposite to that of the multiframe interleaver 250 of the transmission-side circuit 200, restores the signal subjected to the replacement to the original OTN frame signal, and outputs the restored signal to the interleaver 330. Restoration of a signal sequence of a multiframe unit in the multiframe deinterleaver 320 will be described later.

The interleaver 330 replaces a signal sequence for the input OTN frame signal in accordance with the sequence conversion method defined in ITU-T G.975 in the same manner as the interleaver 220 of the transmission-side circuit 200 and outputs the signal subjected to the replacement to the FEC decoder 340.

The FEC decoder 340 error-corrects data signals of the input OTN frame and outputs the data signals after error correction to the deinterleaver 350. The transmission signal passes through a transfer path in a state where a signal sequence of a multiframe unit has been replaced in the multiframe interleaver 250 of the transmission-side circuit 200, and therefore errors generated during passing through a transfer path are dispersed (uniformed) inside the multiframe. Therefore, even when burst errors exceeding a size of a subframe are generated during transfer in the transfer path, the errors are dispersed between frames and error correction is performed in the FEC decoder 340. The FEC decoder 340 is included in an error correction executing means of CLAIMS.

The deinterleaver 350 restores the error-corrected OTN frame signal input from the FEC decoder 340 to an OTN frame signal of the original sequence using a procedure opposite to that of the interleaver 330 and outputs the restored signal to the OTN termination unit 360.

The OTN frame termination unit 360 terminates an OTN overhead of the input OTN frame signal and eliminates an error correction code. Further, the OTN frame termination unit 360 restores the original transmission signal from signals of a payload area of the OTN frame signal and outputs the restored signal as a transfer signal.

Next, replacement and restoration of a signal sequence of a multiframe unit in the multiframe interleaver 250 of the transmission-side circuit 200 and the multiframe deinterleaver 320 of the reception-side circuit 300 will be described.

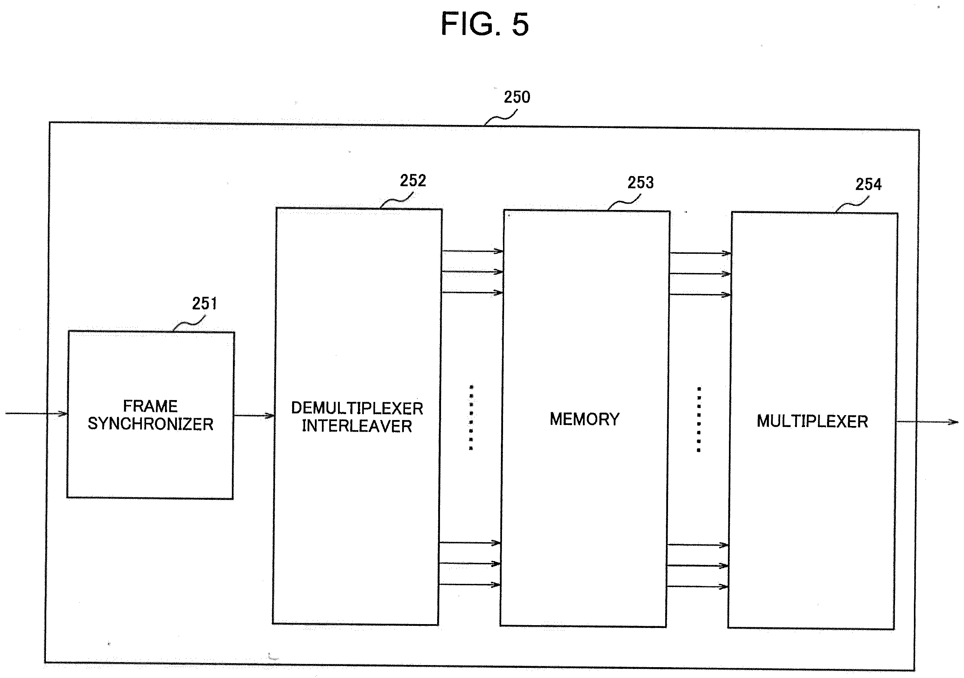

First, the multiframe interleaver 250 of the transmission-side circuit 200 will be described. A block configuration diagram of the multiframe interleaver 250 is illustrated in FIG. 5. In FIG. 5, the multiframe interleaver 250 includes a frame synchronizer 251, a demultiplexer interleaver 252, a memory 253, and a multiplexer 254. In FIG. 5, a direction of an arrow between blocks is not limited to a direction in the figure.

The frame synchronizer 251 detects a head of an OTN frame signal input from the deinterleaver 240 by monitoring an FAS accommodated in the OTN overhead illustrated in FIG. 4 and further recognizes a number (1 to 256) of the OTN frame by referring to an MFAS. Hereinafter, an i-th OTN frame signal input to the frame synchronizer 251 will be described as an OTN frame signal i (i=1 to 256).

The demultiplexer interleaver 252 converts, based on the number (MFAS) of the OTN frame detected in the frame synchronizer 251, data (data signals, a correction code, etc.) excluding a frame alignment of the OTN frame signal to parallel signals and replaces a sequence. The demultiplexer interleaver 252 stores data signals subjected to the parallel conversion and the sequence replacement on the memory 253.

Data signals of which a sequence has been replaced, that are output from the demultiplexer interleaver 252, are written onto the memory 253.

The multiplexer 254 reads data signals for one multiframe cycle from the memory 253 every time data signals for one multiframe cycle are written onto the memory 253. The multiplexer 254 adds, to a head of the read data signals, a corresponding FAS and MFAS and generates N OTN frame signals 1' to 256' (i'=1 to 256).

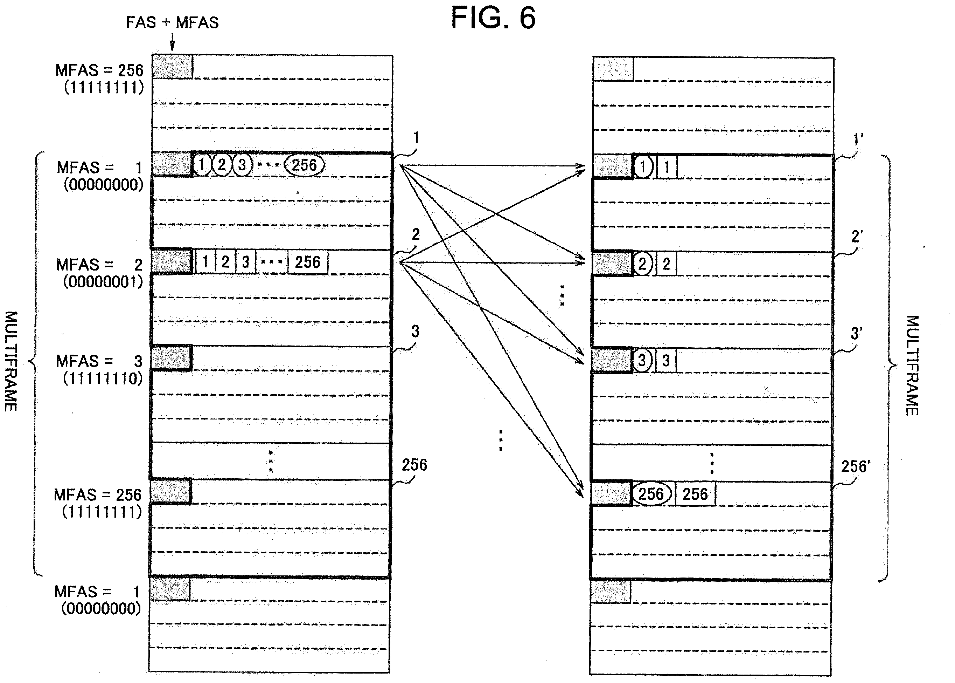

The OTN frame signals 1 to 256 written on the memory 253 are illustrated on the left side of FIG. 6, and the OTN frame signals 1' to 256' generated in the multiplexer 254 are illustrated on the right side of FIG. 6. As illustrated in FIG. 6, one multiframe includes 256 OTN frame signals, and an OTN frame signal i' is generated by sequentially inserting i-th data signals of the OTN frame signal 1 to the OTN frame signal 256 after an FAS and an MFAS.

In the present embodiment, the multiplexer 254 further converts the generated OTN frame signals 1' to 256' to serial signals and outputs the resulting serial signals to the transmission unit 260. The multiplexer 254 according to the present embodiment deletes the data signals used to generate the serial signals from the memory 253 after outputting the serial signals to the transmission unit 260.

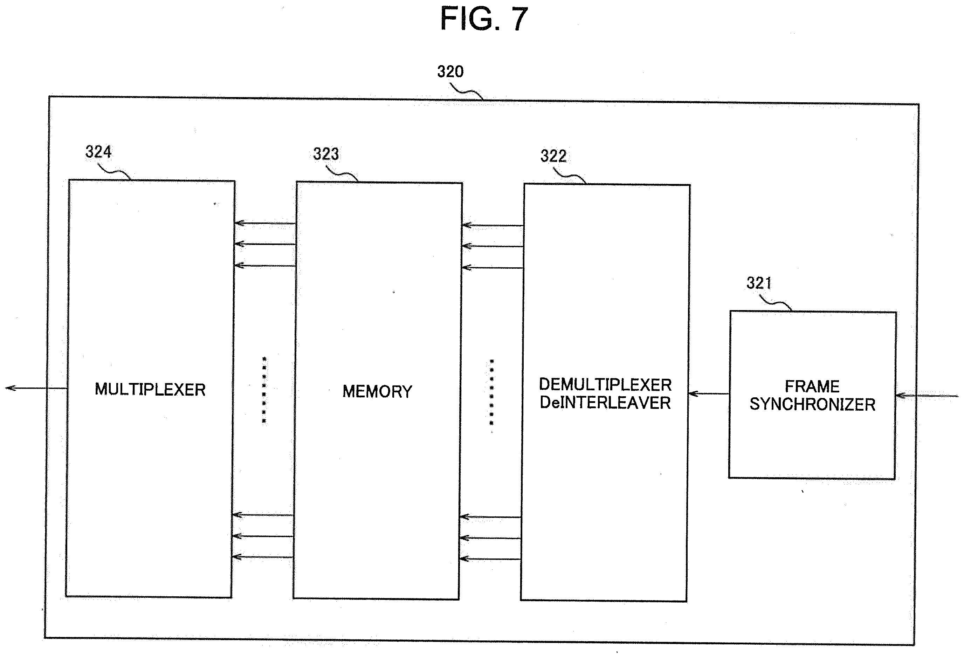

Next, the multiframe deinterleaver 320 of the reception-side circuit 300 will be described. A block configuration diagram of the multiframe deinterleaver 320 is illustrated in FIG. 7. In FIG. 7, the multiframe deinterleaver 320 includes a frame synchronizer 321, a demultiplexer deinterleaver 322, a memory 323, and a multiplexer 324. In FIG. 7, a direction of an arrow between blocks is not limited to a direction in the figure.

The frame synchronizer 321 synchronizes with an OTN frame signal, monitors a FAS and an MFAS and thereby detects a head (an OTN frame signal 1') of a multiframe input from the reception unit 310.

The demultiplexer deinterleaver 322 replaces, based on the detected head of the multiframe, a sequence of data signals using a procedure opposite to that of the demultiplexer interleaver 252 of the multiframe interleaver 250 of the transmission-side circuit 200 and restores the original OTN frame. In other words, data signals of the OTN frame signal 1' are sorted into OTN frame signals 1 to 256, and data signals of an OTN frame signal 2' are sorted in such a way as to be arranged immediately after the OTN frame signals 1 to 256. In the present embodiment, the demultiplexer deinterleaver 322 stores the sequence-replaced data signals of OTN frame signals 1' to 256' on the memory 323.

The data signals are temporarily stored on the memory 323 until completion of sequence conversion of data signals for 256 OTN frames 1' to 256' inside a multiframe in the demultiplexer deinterleaver 322.

The multiplexer 324 reads in parallel data signals for one multiframe cycle from the memory 323 every time data signals for one multiframe cycle are written onto the memory 323. The multiplexer 324 adds, to a head of the read data signals, a corresponding FAS and MFAS and generates OTN frame signals 1 to 256. Thereby, the OTN frame signals 1 to 256 illustrated on the left side of FIG. 6 are restored from the OTN frame signals 1' to 256' illustrated on the right side of FIG. 6. The multiplexer 324 further converts the restored OTN frame signals 1 to 256 to serial signals and outputs the resulting serial signals to the interleaver 330. The multiplexer 324 according to the present embodiment deletes the data signals used to generate the serial signals from the memory 323 after outputting the serial signals to the interleaver 330.

As described above, the optical transfer system 100 according to the present embodiment replaces, in the multiframe interleaver 250 of the transmission-side circuit 200, data signals of an input OTN frame signal in a multiframe unit and transfers the OTN frame signals 1' to 256' in which a sequence of data signals has been replaced in a multiframe unit. The multiframe deinterleaver 320 of the reception-side circuit 300 restores the original OTN frame signals 1 to 256 in a multiframe unit using a procedure opposite to that of the multiframe interleaver 250 of the transmission-side circuit 200.

In this case, it is possible to disperse (uniform) burst errors generated in a transfer path inside a multiframe and perform error correction of burst errors in the FEC decoder 340 of the reception-side circuit 300. Further, when sequence restoration is performed in a multiframe unit, compared with a case where sequence restoration is intermittently performed for input data signals, a processing load on the transmission-side circuit 200 and the reception-side circuit 300 can be inhibited from increasing.

Therefore, the optical transfer system 100 according to the present example embodiment can easily perform error correction of burst errors for a multiframe including a plurality of OTN frame signals without increasing a processing load.

The present invention is not limited to the above embodiments, and even design modifications and the like without departing from the invention as defined by the appended claims.

### [Industrial Applicability]

The present invention is widely applicable to an optical transfer system that transfers a multiframe including a plurality of OTN frame signals.

This application is based upon and claims the benefit of priority from Japanese patent application No. 2015-005055, filed on January 14, 2015.

### [Reference signs List]

- 10: Optical transfer system
- 20: Transmission circuit
- 21: Transmission-side signal recognition means
- 22: Intra-multiframe sequence conversion means
- 23: Transmission-side rearranging means
- 24: Transmission means
- 30: Reception circuit
- 31: Reception means
- 32: Reception-side signal recognition means
- 33: Intra-multiframe sequence restoring means
- 34: Reception-side rearranging means
- 100: Optical transfer system
- 200: Transmission-side circuit
- 210: OTN frame generation unit
- 220: Interleaver
- 230: FEC encoder
- 240: Deinterleaver
- 250: Multiframe interleaver
- 260: Transmission unit
- 300: Reception-side circuit
- 310: Reception unit
- 320: Multiframe deinterleaver
- 330: Interleaver
- 340: FEC decoder
- 350: Deinterleaver
- 360: OTN frame termination unit

## Claims

1. A transmission circuit (200) that transmits a multiframe including N OTN, Optical Transport Network, frame signals that each accommodate an MFAS, Multiframe Alignment Signal, and a plurality of data signals, the OTN frame signal including a plurality of subframes, the transmission circuit comprising:
transmission-side signal recognition means (210) for detecting the MFAS and recognizing an order i, wherein 1 ≤ i ≤ N, of the OTN frame signal;
intra-multiframe sequence conversion means (250) for converting a sequence of the plurality of data signals inside the multiframe in accordance with the recognized order i;
transmission-side rearranging means (250) for acquiring the sequence -converted data signals in a multiframe unit, consolidating the sequence -converted data signals into lengths equal to those of the OTN frame signals respectively, and generating N quasi-OTN frame signals being sequentially added with an MFAS; and
transmission means (260) for transmitting a multiframe including the N generated quasi-OTN frame signals;
first inter-subframe sequence conversion means (220) for replacing a sequence of a plurality of data signals of an OTN frame signal, based on a predetermined order for each of the subframes, and outputting the replaced sequence to error correction code adding means;
the error correction code adding means (230) for generating an error correction code, adding the error correction code to the OTN frame signal, and outputting an OTN frame signal added with the error correction code to intra-multiframe sequence conversion means; and
first inter-subframe sequence restoring means (240) for restoring an OTN frame signal output from the error correction code adding means by using a procedure opposite to that of the first inter-subframe sequence conversion means,
and outputting the restored OTN frame signal to the intra-multiframe sequence conversion means,
wherein
the intra-multiframe sequence conversion means converts, inside a multiframe, a sequence of the plurality of data signals and the error correction code.

2. The transmission circuit according to claim 1, wherein the intra-multiframe sequence conversion means sequentially arranges N continuous data signals accommodated in an i-th OTN frame signal in an i-th data signal area of N signals, and the transmission-side rearranging means adds an MFAS indicating an i-th order to signals in which i-th data signals of all OTN frame signals a rearranged in an MFAS order of an OTN frame signal and generates an i-th quasi-OTN frame signal.

3. The transmission circuit according to claim 1 or 2, further comprising transmission-side storage means for holding all data signals inside the multiframe in an order according to sequence conversion in the intra-multiframe sequence conversion means, wherein the transmission-side rearranging means reads the sequence-converted data signals from the transmission-side storage means in a multiframe unit and consolidates the read data signals.

4. A reception circuit (300) that receives a multiframe transmitted from the transmission circuit according to any one of claims 1 to 3, the reception circuit comprising:
reception means (310) for receiving a multiframe including N quasi-OTN frame signals;
reception-side signal recognition means (320) for detecting an MFAS of the quasi OTN frame signal and recognizing an order of the quasi-OTN frame signal;
intra-multiframe sequence restoring means (320) for restoring a sequence of the plurality of data signals inside the multiframe in accordance with the recognized order by using a procedure opposite to that of the intra-multiframe sequence conversion means; and
reception-side rearranging means (320) for acquiring the sequence-restored data signals in a multiframe unit, consolidating the sequence-restored data signals into lengths equal to those of the quasi-OTN frame signals respectively, and restoring N OTN frame signals being sequentially added with an MFAS;
second inter-subframe sequence conversion means (330) for replacing a sequence of a plurality of data signals of an OTN frame signal, based on a predetermined order for each of the subframes, and outputting the replaced sequence to error correction executing means;
the error correction executing means (340) for performing error correction on an OTN frame signal and outputting the OTN frame signal to second inter-subframe sequence restoring means; and
the second inter-subframe sequence restoring means (350) for restoring the OTN frame signal output from the error correction executing means by using a procedure opposite to that of the second inter-subframe sequence conversion means, and outputting the restored OTN frame signal ,wherein,
the intra-multiframe sequence conversion means converts, inside a multiframe, a sequence of the plurality of data signals and the error correction code.

5. The reception circuit according to claim 4, further comprising reception-side storage means for holding all data signals inside the received multiframe in an order according to sequence restoration in the intra-multiframe sequence restoring means, wherein the reception-side rearranging means reads the sequence - restored data signals from the reception-side storage means in a multiframe unit and consolidates the read data signals.

6. An optical transfer system comprising the transmission circuit according to any one of claims 1 to 3, and the reception circuit according to claim 4 to 5.

7. A method for transmitting a multiframe including N OTN, Optical Transport Network, frame signals that each accommodate an MFAS, Multiframe Alignment Signal, and a plurality of data signals, the OTN frame signal including a plurality of subframes, the method comprising:
detecting the MFAS and recognizing an order i, wherein 1 ≤ i ≤ N, of the OTN frame signal;
converting a sequence of the plurality of data signals inside the multiframe in accordance with the recognized order i;
acquiring the sequence-converted data signals in a multiframe unit, consolidating the sequence-converted data signals into lengths equal to t hose of the OTN frame signals respectively, and generating N quasi -OTN frame signals being sequentially added with an MFAS; and
transmitting a multi frame including the N generated quasi-OTN frame signals;
replacing a sequence of a plurality of data signals of an OTN frame signal, based on a predetermined order for each of the subframes, and outputting the replaced sequence to error correction code adding means;
generating an error correction code, adding the error correction code to the OTN frame signal, and outputting an OTN frame signal added with the error correction code to intra-multiframe sequence conversion means; and
restoring an OTN frame signal output from the error correction code adding means by using a procedure opposite to that of the first inter-subframe sequence conversion means,
and outputting the restored OTN frame signal to the intra-multiframe sequence conversion means,
wherein
the intra-multiframe sequence conversion means converts, inside a multiframe, a sequence of the plurality of data signals and the error correction code.

## Patentansprüche

1. Übertragungsschaltung (200), die einen Mehrfachrahmen überträgt, der N OTN-, Optical Transport Network, Rahmensignale enthält, die jeweils ein MFAS, Multiframe Alignment Signal, und mehrere Datensignale aufnehmen, wobei das OTN-Rahmensignal mehrere Unterrahmen aufweist,
wobei die Übertragungsschaltung aufweist:
eine übertragungsseitige Signalerkennungseinrichtung (210) zum Erfassen des MFAS und zum Erkennen einer Reihenfolge i, wobei 1 ≤ i ≤ N ist, des OTN-Rahmensignals;
eine Intra-Mehrfachrahmen-Sequenzumwandlungseinrichtung (250) zum Umwandeln einer Sequenz der mehreren Datensignale innerhalb des Mehrfachrahmens gemäß der erkannten Reihenfolge i;
eine übertragungsseitige Umordnungseinrichtung (250) zum Erfassen der sequenzumgewandelten Datensignale in einer Mehrfachrahmeneinheit, Konsolidieren der sequenzumgewandelten Datensignale zu Längen, die denjenigen der jeweiligen OTN-Rahmensignale gleichen, und Erzeugen von N Quasi-OTN-Rahmensignalen, denen sequentiell ein MFAS hinzugefügt ist; und
eine Übertragungseinrichtung (260) zum Übertragen eines Mehrfachrahmens, der die N erzeugten Quasi-OTN-Rahmensignale enthält;
eine erste Inter-Unterrahmen-Sequenzumwandlungseinrichtung (220) zum Ersetzen einer Sequenz mehrerer Datensignale eines OTN-Rahmensignals basierend auf einer vorgegebenen Reihenfolge für jeden der Unterrahmen und zum Ausgeben der ersetzten Sequenz an eine Einrichtung zum Hinzufügen eines Fehlerkorrekturcodes,
die Einrichtung (230) zum Hinzufügen eines Fehlerkorrekturcodes zum Erzeugen eines Fehlerkorrekturcodes, Hinzufügen des Fehlerkorrekturcodes zum OTN-Rahmensignal und Ausgeben eines OTN-Rahmensignals, dem der Fehlerkorrekturcode hinzugefügt wurde, an die Intra-Mehrfachrahmen-Sequenzumwandlungseinrichtung; und
eine erste Inter-Unterrahmen-Sequenzwiederherstellungseinrichtung (240) zum Wiederherstellen eines von der Einrichtung zum Hinzufügen eines Fehlerkorrekturcodes ausgegebenen OTN-Rahmensignals unter Verwendung einer Prozedur, die derjenigen der ersten Inter-Unterrahmen-Sequenzumwandlungseinrichtung entgegengesetzt ist, und zum Ausgeben des wiederhergestellten OTN-Rahmensignals an die Intra-Mehrfachrahmen-Sequenzumwandlungseinrichtung,
wobei die Intra-Mehrfachrahmen-Sequenzumwandlungseinrichtung innerhalb eines Mehrfachrahmens eine Sequenz der mehreren Datensignale und den Fehlerkorrekturcode umwandelt.

2. Übertragungsschaltung nach Anspruch 1, wobei die Intra-Mehrfachrahmen-Sequenzumwandlungseinrichtung N kontinuierliche Datensignale, die in einem i-ten OTN-Rahmensignal aufgenommen sind, in einem i-ten Datensignalbereich von N Signalen sequentiell anordnet und die übertragungsseitige Umordnungseinrichtung ein MFAS, das eine i-te Reihenfolge anzeigt, zu Signalen hinzufügt, in denen i-te Datensignale aller OTN-Rahmensignale in einer MFAS-Reihenfolge eines OTN-Rahmensignals umgeordnet sind, und ein i-tes Quasi-OTN-Rahmensignal erzeugt.

3. Übertragungsschaltung nach Anspruch 1 oder 2, ferner mit einer übertragungsseitigen Speichereinrichtung zum Halten aller Datensignale innerhalb des Mehrfachrahmens in einer Reihenfolge gemäß der Sequenzumwandlung in der Intra-Mehrfachrahmen-Sequenzumwandlungseinrichtung, wobei die übertragungsseitige Umordnungseinrichtung die sequenzumgewandelten Datensignale aus der übertragungsseitigen Speichereinrichtung in einer Mehrfachrahmeneinheit ausliest und die ausgelesenen Datensignale konsolidiert.

4. Empfangsschaltung (300), die einen von der Übertragungsschaltung nach einem der Ansprüche 1 bis 3 übertragenen Mehrfachrahmen empfängt, wobei die Empfangsschaltung aufweist:
eine Empfangseinrichtung (310) zum Empfangen eines Mehrfachrahmens, der N Quasi-OTN-Rahmensignale aufweist;
eine empfangsseitige Signalerkennungseinrichtung (320) zum Erfassen eines MFAS des Quasi-OTN-Rahmensignals und zum Erkennen einer Reihenfolge des Quasi-OTN-Rahmensignals;
eine Intra-Multirahmen-Sequenzwiederherstellungseinrichtung (320) zum Wiederherstellen einer Sequenz der mehreren Datensignale innerhalb des Mehrfachrahmens gemäß der erkannten Reihenfolge unter Verwendung einer Prozedur, die derjenigen der Intra-Mehrfachrahmen-Sequenzumwandlungseinrichtung entgegengesetzt ist; und
eine empfangsseitige Umordnungseinrichtung (320) zum Erfassen der sequenzwiederhergestellten Datensignale in einer Mehrfachrahmeneinheit, Konsolidieren der sequenzwiederhergestellten Datensignale in Längen, die denjenigen der Quasi-OTN-Rahmensignale gleichen, und Wiederherstellen von N OTN-Rahmensignalen, denen sequentiell ein MFAS hinzugefügt ist;
eine zweite Inter-Unterrahmen-Sequenzumwandlungseinrichtung (330) zum Ersetzen einer Sequenz mehrerer Datensignale eines OTN-Rahmensignals basierend auf einer vorgegebenen Reihenfolge für jeden der Unterrahmen und zum Ausgeben der ersetzten Sequenz an eine Fehlerkorrekturausführungseinrichtung;
die Fehlerkorrekturausführungseinrichtung (340) zum Ausführen einer Fehlerkorrektur bezüglich eines OTN-Rahmensignals und zum Ausgeben des OTN-Rahmensignals an die zweite Inter-Unterrahmen-Sequenzwiederherstellungseinrichtung; und
die zweite Inter-Unterrahmen-Sequenzwiederherstellungseinrichtung (350) zum Wiederherstellen des von der Fehlerkorrekturausführungseinrichtung ausgegebenen OTN-Rahmensignals unter Verwendung einer Prozedur, die derjenigen der zweiten Inter-Unterrahmen-Sequenzumwandlungseinrichtung entgegengesetzt ist, und zum Ausgeben des wiederhergestellten OTN-Rahmensignals, wobei
die Intra-Mehrfachrahmen- S equenzumwandlungseinrichtung innerhalb eines Mehrfachrahmens eine Sequenz der mehreren Datensignale und den Fehlerkorrekturcode umwandelt.

5. Empfangsschaltung nach Anspruch 4, ferner mit einer empfangsseitigen Speichereinrichtung zum Halten aller Datensignale innerhalb des empfangenen Mehrfachrahmens in einer Reihenfolge gemäß der Sequenzwiederherstellung in der Intra-Mehrfachrahmen-Sequenzwiederherstellungseinrichtung, wobei die empfangsseitige Umordnungseinrichtung die sequenzwiederhergestellten Datensignale von der empfangsseitigen Speichereinrichtung in einer Mehrfachrahmeneinheit ausliest und die gelesenen Datensignale konsolidiert.

6. Optisches Übertragungssystem mit der Übertragungsschaltung nach einem der Ansprüche 1 bis 3 und mit der Empfangsschaltung nach Anspruch 4 bis 5.

7. Verfahren zum Übertragen eines Mehrfachrahmens, der N OTN-, Optical Transport Network, Rahmensignale aufweist, die jeweils ein MFAS, Multiframe Alignment Signal, und mehrere Datensignale aufnehmen, wobei das OTN-Rahmensignal mehrere Unterrahmen enthält, wobei das Verfahren die Schritte aufweist:
Erfassen des MFAS und Erkennen einer Reihenfolge i, wobei 1 ≤ i ≤ N ist, des OTN-Rahmensignal;
Umwandeln einer Sequenz der mehreren Datensignale innerhalb des Mehrfachrahmens gemäß der erkannten Reihenfolge i;
Erfassen der sequenzumgewandelten Datensignale in einer Mehrfachrahmeneinheit, Konsolidieren der sequenzumgewandelten Datensignale zu Längen, die jeweils denjenigen der OTN-Rahmensignale gleichen, und Erzeugen von N Quasi-OTN-Rahmensignalen, denen sequentiell ein MFAS hinzugefügt ist; und
Übertragen eines Mehrfachrahmens, der die N erzeugten Quasi-OTN-Rahmensignale enthält;
Ersetzen einer Sequenz mehrerer Datensignale eines OTN-Rahmensignals basierend auf einer vorgegebenen Reihenfolge für jeden der Unterrahmen und Ausgeben der ersetzten Sequenz an eine Einrichtung zum Hinzufügen eines Fehlerkorrekturcodes;
Erzeugen eines Fehlerkorrekturcodes, Hinzufügen des Fehlerkorrekturcodes zum OTN-Rahmensignal und Ausgeben eines OTN-Rahmensignals, dem der Fehlerkorrekturcode hinzugefügt wurde, an eine Intra-Mehrfachrahmen-Sequenzumwandlungseinrichtung; und
Wiederherstellen eines von der Einrichtung zum Hinzufügen eines Fehlerkorrekturcodes ausgegebenen OTN-Rahmensignals unter Verwendung einer Prozedur, die derjenigen der ersten Inter-Unterrahmen-Sequenzumwandlungseinrichtung entgegengesetzt ist; und
Ausgeben des wiederhergestellten OTN-Rahmensignals an die Intra-Mehrfachrahmen-Sequenzumwandlungseinrichtung,
wobei die Intra-Mehrfachrahmen-Sequenzumwandlungseinrichtung innerhalb eines Mehrfachrahmens eine Sequenz der mehreren Datensignale und den Fehlerkorrekturcode umwandelt.

## Revendications

1. Circuit de transmission (200) qui transmet une multitrame comportant N signaux de trame de réseau de transport optique, OTN, qui contiennent chacun un signal d'alignement multitrame, MFAS, et une pluralité de signaux de données, le signal de trame OTN comportant une pluralité de sous-trames, le circuit de transmission comprenant :
un moyen de reconnaissance de signal côté transmission (210) pour détecter le MFAS et reconnaître un ordre I, dans lequel 1 ≤ I ≤ N, du signal de trame OTN ;
un moyen de conversion de séquence intramultitrame (250) pour convertir une séquence de la pluralité de signaux de données à l'intérieur de la multitrame conformément à l'ordre I reconnu ;
un moyen de réagencement côté transmission (250) pour acquérir les signaux de données convertis en séquence dans une unité multitrame, consolider les signaux de données convertis en séquence en des longueurs égales à celles des signaux de trame OTN respectivement, et générer N signaux de trame quasi-OTN qui sont ajoutés séquentiellement avec un MFAS ; et
un moyen de transmission (260) pour transmettre une multitrame comportant les N signaux de trame quasi-OTN générés ;
un premier moyen de conversion de séquence inter-sous-trame (220) pour remplacer une séquence d'une pluralité de signaux de données d'un signal de trame OTN, d'après un ordre prédéterminé pour chacune des sous-trames, et fournir en sortie la séquence remplacée à un moyen d'ajout de code de correction d'erreur;
le moyen d'ajout de code de correction d'erreur (230) pour générer un code de correction d'erreur, ajouter le code de correction d'erreur au signal de trame OTN, et fournir en sortie un signal de trame OTN ajouté au code de correction d'erreur au moyen de conversion de séquence intramultitrame ; et
un premier moyen de restauration de séquence inter-sous-trame (240) pour restaurer un signal de trame OTN fourni en sortie depuis le moyen d'ajout de code de correction d'erreur en utilisant une procédure opposée à celle du premier moyen de conversion de séquence inter-sous-trame,
et fournir en sortie le signal de trame OTN restauré au moyen de conversion de séquence intramultitrame,
dans lequel
le moyen de conversion de séquence intramultitrame convertit, à l'intérieur d'une multitrame, une séquence de la pluralité de signaux de données et le code de correction d'erreur.

2. Circuit de transmission selon la revendication 1, dans lequel le moyen de conversion de séquence intramultitrame agence séquentiellement N signaux de données continus contenus dans un i^{ème} signal de trame OTN dans une i^{ème} zone de signal de données de N signaux, et le moyen de réagencement côté transmission ajoute un MFAS indiquant un i^{ème} ordre à des signaux dans lesquels des i^{ème} signaux de données de tous les signaux de trame OTN sont réagencés dans un ordre MFAS d'un signal de trame OTN et génère un i^{ème} signal de trame quasi-OTN.

3. Circuit de transmission selon la revendication 1 ou 2, comprenant en outre un moyen de stockage côté transmission pour conserver tous les signaux de données à l'intérieur de la multitrame dans un ordre selon une conversion de séquence dans le moyen de conversion de séquence intramultitrame, dans lequel le moyen de réagencement côté transmission lit les signaux de données convertis en séquence provenant du moyen de stockage côté transmission dans une unité multitrame et consolide les signaux de données lus.

4. Circuit de réception (300) qui reçoit une multitrame transmise depuis le circuit de transmission selon l'une quelconque des revendications 1 à 3, le circuit de réception comprenant :
un moyen de réception (310) pour recevoir une multitrame comportant N signaux de trame quasi-OTN ;
un moyen de reconnaissance de signal côté réception (320) pour détecter un MFAS du signal de trame quasi-OTN et reconnaître un ordre du signal de trame quasi-OTN ;
un moyen de restauration de séquence intramultitrame (320) pour restaurer une séquence de la pluralité de signaux de données à l'intérieur de la multitrame conformément à l'ordre reconnu en utilisant une procédure opposée à celle du moyen de conversion de séquence intramultitrame ; et
un moyen de réagencement côté réception (320) pour acquérir les signaux de données restaurés en séquence dans une unité multitrame, consolider les signaux de données restaurés en séquence en longueurs égales à celles des signaux de trame quasi-OTN respectivement, et restaurer N signaux de trame OTN qui sont séquentiellement ajoutés à un MFAS ;
un deuxième moyen de conversion de séquence inter-sous-trame (330) pour remplacer une séquence d'une pluralité de signaux de données d'un signal de trame OTN, d'après un ordre prédéterminé pour chacune des sous-trames, et fournir en sortie la séquence remplacée à un moyen d'exécution de correction d'erreur ;
le moyen d'exécution de correction d'erreur (340) pour réaliser une correction d'erreur sur un signal de trame OTN et fournir en sortie le signal de trame OTN à un deuxième moyen de restauration de séquence inter-sous-trame ; et
le deuxième moyen de restauration de séquence inter-sous-trame (350) pour restaurer le signal de trame OTN fourni en sortie depuis le moyen d'exécution de correction d'erreur en utilisant une procédure opposée à celle du deuxième moyen de conversion de séquence inter-sous-trame, et fournir en sortie le signal de trame OTN restauré, dans lequel,
le moyen de conversion de séquence intramultitrame convertit, à l'intérieur d'une multitrame, une séquence de la pluralité de signaux de données et le code de correction d'erreur.

5. Circuit de réception selon la revendication 4, comprenant en outre un moyen de stockage côté réception pour conserver tous les signaux de données à l'intérieur de la multitrame reçue dans un ordre selon une restauration de séquence dans le moyen de restauration de séquence intramultitrame, dans lequel le moyen de réagencement côté réception lit les signaux de données restaurés en séquence provenant du moyen de stockage côté réception dans une unité multitrame et consolide les signaux de données lus.

6. Système de transfert optique comprenant le circuit de transmission selon l'une quelconque des revendications 1 à 3, et le circuit de réception selon les revendications 4 et 5.

7. Procédé de transmission d'une multitrame comportant N signaux de trame de réseau de transport optique, OTN, qui contiennent chacun un signal d'alignement multitrame, MFAS, et une pluralité de signaux de données, le signal de trame OTN comportant une pluralité de sous-trames, le procédé comprenant les étapes de :
détecter le MFAS et la reconnaissance d'un ordre I, dans lequel 1 ≤ I ≤ N, du signal de trame OTN ;
convertir une séquence de la pluralité de signaux de données à l'intérieur de la multitrame conformément à l'ordre I reconnu ;
acquérir les signaux de données convertis en séquence dans une unité multitrame, la consolidation des signaux de données convertis en séquence en longueurs égales à celles des signaux de trame OTN respectivement, et la génération de N signaux de trame quasi-OTN qui sont séquentiellement ajoutés à un MFAS ; et
transmettre une multitrame comportant les N signaux de trame quasi-OTN générés ;
remplacer une séquence d'une pluralité de signaux de données d'un signal de trame OTN, d'après un ordre prédéterminé pour chacune des sous-trames, et la fourniture en sortie de la séquence remplacée à un moyen d'ajout de code de correction d'erreur;
générer un code de correction d'erreur, l'ajout du code de correction d'erreur au signal de trame OTN, et la fourniture en sortie d'un signal de trame OTN ajouté au code de correction d'erreur à un moyen de conversion de séquence intramultitrame ; et
restaurer un signal de trame OTN fourni en sortie depuis le moyen d'ajout de code de correction d'erreur en utilisant une procédure opposée à celle du premier moyen de conversion de séquence inter-sous-trame,
et fournir en sortie le signal de trame OTN restauré au moyen de conversion de séquence intramultitrame,
dans lequel
le moyen de conversion de séquence intramultitrame convertit, à l'intérieur d'une multitrame, une séquence de la pluralité de signaux de données et le code de correction d'erreur.
